# EUROPEAN PATENT APPLICATION

(11) **EP 4 266 607 A1**
(43) Date of publication of application: **25.10.2023**
(21) Application number: 22169161.1
(22) Date of filing: 21.04.2022
(51) Int. Cl.: H04L 1/00, H04L 1/18

(54) **RE-TRANSMISSION OF A TRANSMITTED CONCATENATION PACKET BY A SENDING DEVICE, ESPECIALLY A BASE STATION DEVICE OR A TERMINAL DEVICE OF A TELECOMMUNICATION NETWORK**

(71) Applicant: Continental Automotive Technologies GmbH, 30165 Hannover (DE)
(72) Inventor: Kim, Hojin, 81737 München (DE); Shah, Rikin, 81737 München (DE); Gonzalez Gonzalez, David, 81737 München (DE); Gonsa, Osvaldo, 81737 München (DE)
(74) Representative: Continental Corporation

(57) **Abstract**

The invention concerns a base station, a terminal device, a network and a method for re-transmission of a transmitted original concatenation packet by a sending device station (gNB, BS, UE), especially a base station (gNB, BS) device or a terminal device (UE1, UE2, ..., UEk) of a telecommunication network (100), especially a cellular telecommunication network,
wherein an original concatenation packet (1; 2; 3) comprises several sub-packets (11, 12, 13; 21, 22, 23; 31, 32, 33),
wherein re-transmission of a full or partial concatenation packet (5; 6; 7; 8) by a base station or terminal sending device (gNB, BS; UE1, UE2, ..., UEk) to at least one receiving terminal device (UE1, UE2, ..., UEk)
is done after the sending device (gNB, BS; UE1, UE2, ..., UEk) receiving a transmission failure indicating signal (NACK; no ACK) representing at least one failed transmission of an original concatenation packet (1; 2; 3) to at least one receiving terminal device (UE1, UE2, ..., UEk),
wherein the sending device (gNB, BS; UE1, UE2, ..., UEk) decides on re-transmission modes (1-1; 1-2; 1-3; 2-1; 2-2; 3-1; 3-2) representing how to transmit a re-transmission concatenation (5; 6; 7;8) packet, based on re-transmission criteria (201, 202).

## Description

The invention relates to a base station, a terminal and a method for re-transmission of a transmitted original concatenation packet by a sending device, especially a base station device or a terminal device of a telecommunication network, especially a cellular telecommunication network.

Telecommunication networks and devices for of packet re-transmission for different applications/scenarios are e.g. known from:
US/2020/0351032, "Method And Apparatus For Providing HARQ Feedback In Wireless Communication System",
WO/2020/143417, "Method And Device For Configuring HARQ Feedback Between Terminal Nodes",
Pub.# WO/2020/161544, "Selective Retransmission of Groupcast Data", Lenovo PTE, Pub.# WO/2020/168574, "Information Transmission Method, Terminal Device, And Network Device", Oppo Mobile Telecommunications,
WO/2021/227085, "Multi-user Packet For User Equipment Assisted Retransmission",
US/2021/0289419, "Path Selection For Sidelink Relay",
US/2019/0305896, "Method And System For Supporting Multiple Hybrid Automatic, Repeat Request Processes Per Transmission Time Interval".

An object of the invention is to allow improved re-transmission in a telecommunication network, especially cellular telecommunication network by addressing a new BS behavior with metrics of re-transmission criteria for concatenation packets. This object is respectively achieved by the teaching of the independent patent claims.

Embodiments of the invention allow an improved concatenation packet re-transmission handling especially in a cellular telecommunication network, The dependent patent claims describe some advantageous embodiments of the invention.

In the following some embodiments of the invention are described, which also in any combination present further embodiments of the invention.

Embodiments of the invention are described below with reference to the enclosed figures:
FIG. 1 shows a concatenated packet transmission with a sub-packet receipt failure,
FIG. 2 shows concatenated packet transmissions with sub-packet receipt failures,
FIG. 3 shows concatenated packet transmissions by a base station device with a sub-packet receipt failure for sidelink groupcast,
FIG. 4 shows a flow chart of an inventive embodiment of a base station behavior with concatenation packet re-transmission types and/or re-transmission modes,
FIG. 5 shows a table of alternative modes that are part of a re-transmission mode,
FIG. 6 shows a re-transmission mode selection and operation table,
FIG. 7 shows a full re-transmission of an original concatenation packet,
FIG. 8 shows a partial (and hybrid) re-transmission of an original concatenation packet,
FIG. 9 shows a (partial) sidelink re-transmission of an original concatenation packet,
FIG. 10 shows two re-transmissions of an original concatenation packet and an alternative or additional (partial) sidelink re-transmission of an original concatenation packet,
FIG. 11 shows signaling and transmission, for a transmission of an original concatenation packet and for a sidelink re-transmission,
FIG. 12 shows a flow chart of signaling and transmission, for a transmission of an original concatenation packet and for a sidelink re-transmission with RepUE determination,
FIG. 13 shows a flow chart of re-transmission mode selection and of signaling for the pre-configured RepUE candidate list for a sidelink,
FIG. 14 shows single UE, multiple UEs and multiple UE cluster concatenation packet transmission / re-transmissions,
FIG. 15 shows packet structure for single UE, multiple UEs and multiple UE cluster concatenation packet transmission / re-transmission as in Fig. 14.

Regarding "concatenation" packets and transmissions, a concatenated transmission of concatenation packets is e.g. known from 3GPP, e.g. 3.2.1 or 3.2.2, definitions and examples of concatenation can be found there online.

A "concatenated" transmission of concatenation packets can e.g. comprise sending in respectively one of the so called concatenation packets (of a concatenation transmission) sub-packets intended for different user terminal devices (e.g. mobile phones, smartphones, metering device, car TCUs, wearables, modules etc).

A concatenated transmission of concatenation packets can e.g. used for a ultra-reliable (which can e.g. also mean high QoS required) and/or a low-latency communication etc.

For DL (downlink; base station to terminal equipment) transmissions, multiple packets intended for a group of UEs can be concatenated as well as single UE based multi-packet concatenation.

Ultra-reliable and low-latency communication (URLLC) (i.e. e.g. communication with low latency budget and/or allowing few latency) is one of key service areas introduced in 5G along with other major ones such as enhanced mobile broadband (eMBB) and machine-type communication (MTC).

URLLC contains many important applications and use cases. Some of them include intelligent transportation, autonomous driving, industrial/process automation, tactile internet, tele-surgery, virtual/augmented reality, etc.

To reduce latency, short packet size has been introduced for URLLC since support of URLLC services needs the stringent requirement for high reliability and/or low latency. However, it could cause a few critical problems such as high signaling traffic overhead, reliability performance degradation, and inefficient radio resource use due to short packet transmissions.

Therefore, packet concatenation concept has been introduced to improve those problems for URLLC.

Packet concatenation also provides another challenging problem about how to re-transmit (meaning especially here: re-send) a concatenation packet (that was already unsuccessfully sent at least once) efficiently when any packet reception fails on receiver side.

When one single or several (multiple) terminal devices UE1, UE2, ..., UEk receive a concatenation packet, there is a possibility that it cannot be decoded successfully (i.e. e.g. it cannot be received successfully due to e.g. bad air interface connection etc.) by at least one or several of the receiving terminal devices UE1, UE2, ..., UEk. In such case, the terminal device(s) UE1, UE2, ..., UEk or HARQ can send or need(s) to send a request for re-transmission of the packet (and/or sub packets) in e.g. a message e.g. representing a failed receipt (non-acknowledgement) known as NACK to e.g. a base station BS, gNB (and/or a sending UE if the concatenation packet is from that UE). Or alternatively if a positive receipt confirmation ACK is expected according to a protocol etc, it sends no ACK to a base station gNB which detects the missing ACK and thus detects a transmission failure.

Requests for re-transmissions as such (of not successfully received packets, i.e. not decoded packets), e.g. in HARQ procedures or otherwise, are known to the expert, e.g. from 3GPP where details can be found online with those search terms online.

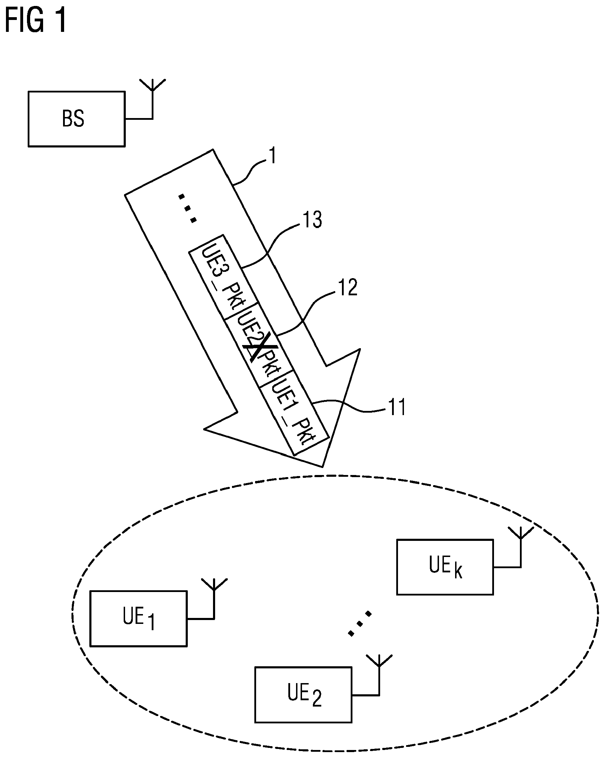

**FIG. 1** shows a so called concatenated transmission (indicated by an arrow) of a concatenated packet 1 containing several sub-packets 11, 12, 13 etc from a base station device BS ( in the following also as a simplification named a gNB) over a telecommunication network, especially cellular network (as e.g. 2G, 3G, 4G, 5G, 6G), to at least one, here a group of terminal devices UE1, UE2, ..., UEk.

In the concatenated packet 1 in Fig. 1, at least one sub-packet 11 is (meant) for a terminal device UE1 (whereas all other UEs can ignore it), at least one sub-packet 12 is for terminal device UE2 (whereas all other UEs can ignore it), and at least one sub-packet 13 is for terminal device UE3 (whereas all other UEs can ignore it).

One or several of the terminal devices UE1, UE2, ..., UEk can inform the base station device BS with a signaled message NACK that a packet or at least one sub-packet 12 was not successfully received.

The base station device BS can then re-transmit (send again) concatenated packet 1 containing the sub-packet 12 to terminal devices UE1, UE2, ..., UEk.

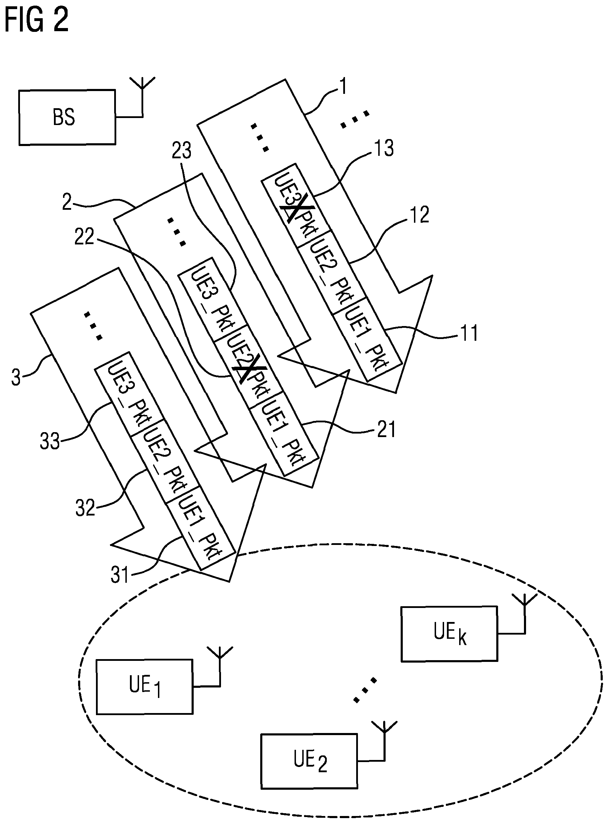

**FIG. 2** shows (concatenated) transmissions (each indicated respectively by an arrow) of concatenated packets 1, 2, 3, ... etc each containing several sub-packets 11, 12, 13, 21, 22, 23, 31, 32, 33 etc from a base station device BS ( in the following also named agNB) over a telecommunication network, especially cellular network (as e.g. 2G, 3G, 4G, 5G, 6G), to at least one, here a group of terminal devices UE1, UE2, ..., UEk.

In the concatenated packet 1 in Fig. 1, at least one sub-packet 11 is for terminal device UE1 (whereas all other UEs can ignore 11), at least one sub-packet 12 is for terminal device UE2 (whereas all other UEs can ignore 12), and at least one sub-packet 13 is for terminal device UE3 (whereas all other UEs can ignore 13).

In the concatenated packet 2 in Fig. 2, at least one sub-packet 21 is for terminal device UE1 (whereas all other UEs can ignore 21), at least one sub-packet 22 is for terminal device UE2 (whereas all other UEs can ignore 22), and at least one sub-packet 23 is for terminal device UE3 (whereas all other UEs can ignore 23).

In the concatenated packet 3 in Fig. 2, at least one sub-packet 31 is for terminal device UE1 (whereas all other UEs can ignore 31), at least one sub-packet 32 is for terminal device UE2 (whereas all other UEs can ignore 32), and at least one sub-packet 33 is for terminal device UE3 (whereas all other UEs can ignore 33).

Here transmission of a sub-packet 22 to one of the terminal devices UE2 fails, i.e. it is not successfully received (=decoded), indicated by a cross in sub-packet 22. Moreover, here transmission of a sub-packet 13 to one of the terminal devices UE1 fails, i.e. it is not successfully received (=decoded), indicated by a cross in sub-packet 13.

One or several of the terminal devices UEs can inform the base station device BS with a signaled message NACK (or by not sending an expected Ack) that a sub-packet 22, 13 for that terminal devices UE2, UE3 was not successfully received by it.

The base station device BS or a terminal device UE1, UE2, ..., UEk can then re-transmit (send again) one or more (full or partial) concatenated packets 1, 2 containing a failed sub-packet 13, 22 to all UEs for which the original concatenated packet tranmission is intended.

In packet concatenation transmission, re-transmission signaling (e.g. HARQ re-transmission signaling) can be heavily loaded if concatenated packet re-transmission requests are high or too numerous among or from different UEs whose sub-packets 11-13, 21-23, 31-33 e.g. can be concatenated with others (i.e. e.g. transmitted (transmitted meaning especially sent) in the same concatenation packets).

In this case, gNB behaviors might be not clear or well-defined when UEs UE1, UE2, ..., UEk etc send (too many) re-transmission requests, e.g. HARQ NACK as re-transmission requests.

If a base station BS, gNB re-transmits a whole concatenated packet (e.g. 1, 2, 3) to all UEs UE1, UE2, ..., UEk, for those UE that have had a decoding failure (not received / decoded packets or sub-packets), a significant radio resource waste could be problematic and re-transmission signaling traffic between gNB and UEs could be quite heavily loaded depending on link quality conditions.

Therefore, in the following some embodiments of gNB/UE behaviors will be proposed for concatenated packet re-transmission(s), so that radio resource waste and re-transmission signaling traffic can be improved.

After a re-transmission one or more than one re-retransmissions are possible, i.e. e.g. re-transmitting packets or sub-packets more than one time, e.g. for higher or ultra-high transmission reliability or due to further (re-) transmission errors or NACKs (or missing ACKs).

Embodiments of the invention may comprise key ideas as one or more of:
- a new gNB behavior criteria to configure concatenation packet re-transmission,
- sidelink groupcast based UE re-transmission methods for concatenation packet,
- applicability to different types of UE clustering with multiple groups for concatenation packet re-transmission.

A device (as a base station gNB, BS or a terminal equipment UE1, UE2, ..., UEk) can be configured to trigger a re-transmission of an already transmitted original concatenation packet 1; 2 ; 3, (i.e. triggering a transmission of a re-transmission concatenation packet 5; 6; 7; 8):
- by itself doing a full or partial transmission of a re-transmission concatenation packet 5; 6; 7; 8, or
- by triggering a terminal device UE to do a full or partial transmission of a re-transmission concatenation packet 5; 6; 7; 8 (in a sidelink transmission) to other terminal devices UEs.

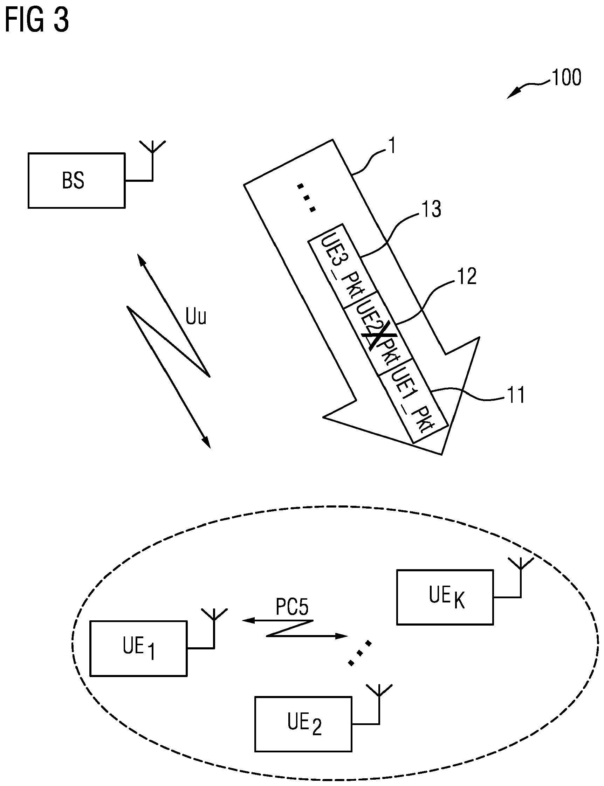

**FIG. 3** shows a so called concatenated transmission (indicated by an arrow) of a concatenated packet 1 containing several sub-packets 11, 12, 13 etc from a base station device BS, gNB to a group of terminal devices UE1, UE2, ..., UEk as in FIG. 1, over a base station - terminal equipment interface Uu (e.g. downlink DL transmission for URLLC application based data packets).

Here after a failed transmission of (only or at least) a sub-packet 12 to UE2, at least one of the (group) terminal devices UE1 (which received the sub-packet 12, that the UE2 did not receive but should get) re-transmits the full or part (e.g. only the failed sub-packet 12) concatenated packet 1 to one or more (group) terminal devices UE2, ..., UEk, here over a (data and/or signaling) link called PC5 and/or called sidelink.

Here at least more than one UE in the downlink cluster can reach each other using a sidelink, e.g. here at least one UE1 of (group) terminal devices UE1, UE2, ..., UEk can reach one or several or all (group) terminal devices UEs for data packet (and/or signaling) transmission, which is called sidelink transmission (as it is not via a base station but e.g. directly UE1 to UE2, ..., UEk).

Target UE packets for concatenation can be selected based on packet concatenation scheduling in a base station BS, gNB. E.g. HARQ for any undecoded (e.g. not successfully received) concatenation packet can be supported and re-transmission mechanism can e.g. be based on gNB behavior criteria.

According to some embodiments of the invention,
new base station device gNB and / or terminal device UE1-k behaviors can be proposed where concatenation packets can be associated with one of the following metrics for re-transmission criteria: UE priority (priority level, e.g. high or low priority or in between; e.g. high priority for streaming low priority for less urgent data and/or high priority for police and/or users with high priority contract etc) 201, UE latency budget, base station ( BS / gNB overload status (e.g. how much re-transmission load/overload the base station has), and more according to target concatenation packet QoS profile category, and generally network conditions and/or base station conditions and or terminal device conditions and/or air interface conditions.

A re-transmission method can then be determined based on a base station BS, gNB (e.g. base station controller) re-transmission policy.

Potential key advantages with this idea can especially e.g. include one or more of:
- improvement of radio resource waste
- reduction of re-transmission signaling traffic overhead
- reduction of re-transmission latency.

A proposed embodiment is e.g. based on work scope of one or two aspects as:
- Re-transmission criteria metrics and multi-mode selection for concatenation packet
- Sidelink groupcast for concatenation packet re-transmission A possible main idea for this solution can be focused on a base station gNB behavior with re-transmission criteria, e.g. when HARQ is needed.

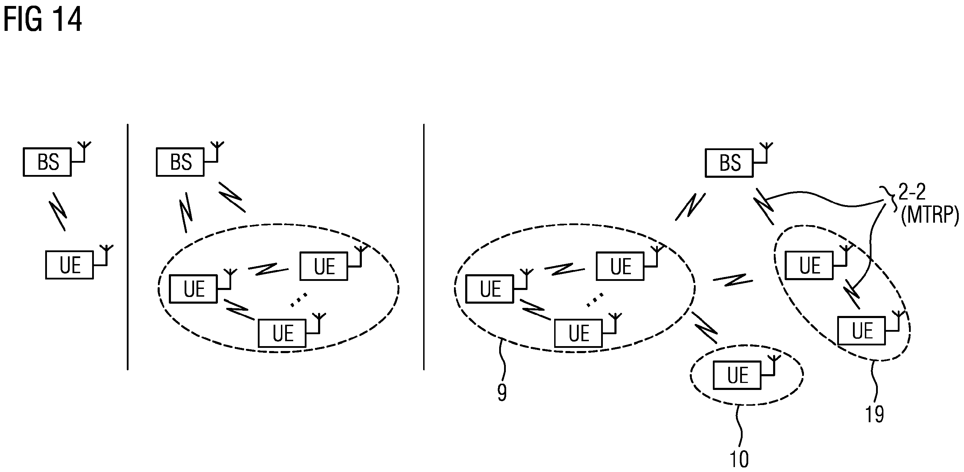

**Fig. 14** shows (simplified) some embodiments of a so called concatenated transmission (indicated respectively by a flash) of at least one concatenated packet 1, 2, 3 (and as well of retransmitted concatenation packets) respectively containing one or several sub-packets 11, 12, 13 etc,
- on the left from a base station device BS, gN to a single of terminal device UE,
- in the middle from a base station device BS, gN to a group of terminal devices UE1, UE2, ..., UEk,
- on the right from a base station device BS, gN to a three groups 9, 10, 11 of terminal devices UE1, UE2, ..., UEk.

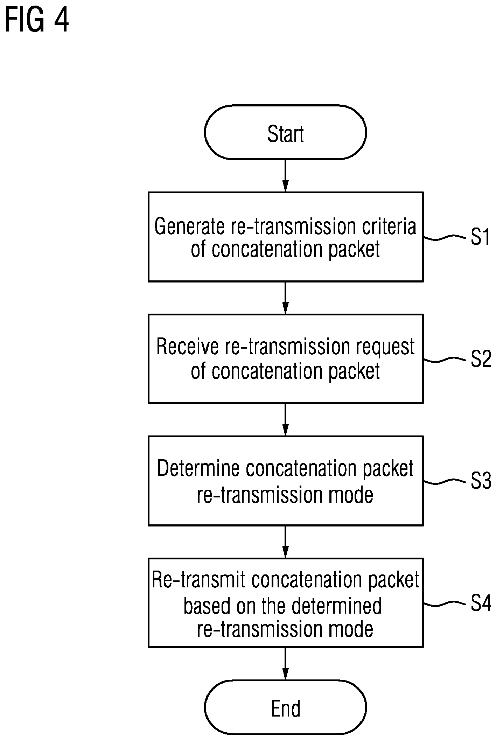

In **Fig. 4**, a (simplified) flow chart shows an example of an inventive embodiment of a base station BS, gNB and or terminal behavior for different concatenation packet re-transmission types and/or re-transmission modes.

A new gNB behavior, especially a selected re-transmission mode, is proposed as an embodiment of the invention, where e.g. concatenation packets 1, 2, 3 (and/or the sub-packets 1-13, 21-23, 31-33) are associated with (and/or evaluated under) one of the (e.g. in a step S1 earlier and/or generally generated /defined) metric for re-transmission criteria, which here especially are one or more of UE priority (priority level, e.g. high or low or between) 201, UE latency budget, gNB overload status, and more according to target concatenation packet QoS profile category.

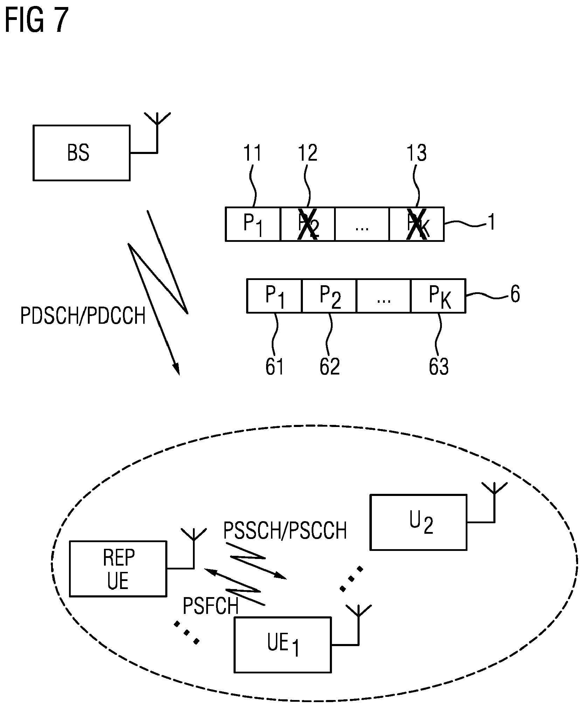

E.g. regarding a suggested new BS, gNB behavior, in case of a re-transmission request (in a step S2) concerning a (unsuccessfully) transmitted concatenation packet 1, and in case of UE with a high(er) priority (priority level, e.g. high or low or between) 201 and/or with a high(er) latency requirement, a base station BS, gNB and/or terminal can (as in Fig. 7, for a group UE1, UE2, ..., UEk or to a single UE1) re-transmit the whole (originally sent) concatenation packet 1 as a full re-transmitted concatenation packet 6 (with same sub-packets 61=11, 62 =12, 63=13), e.g. in order to avoid delay in re-transmission.

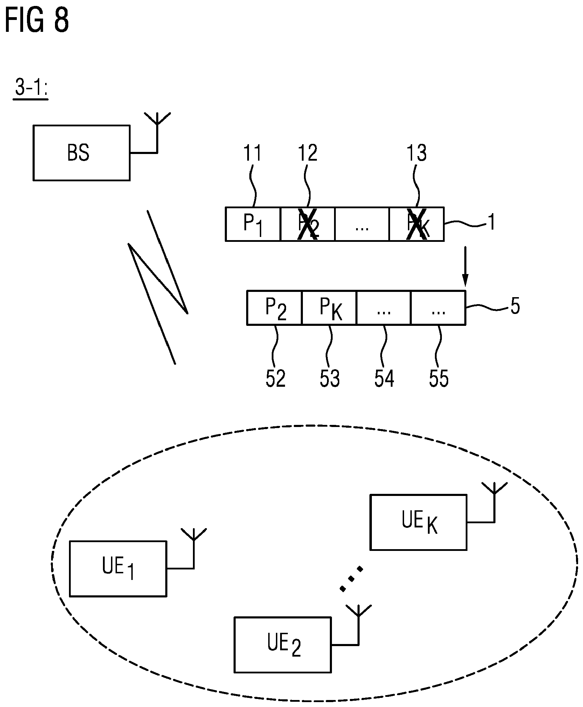

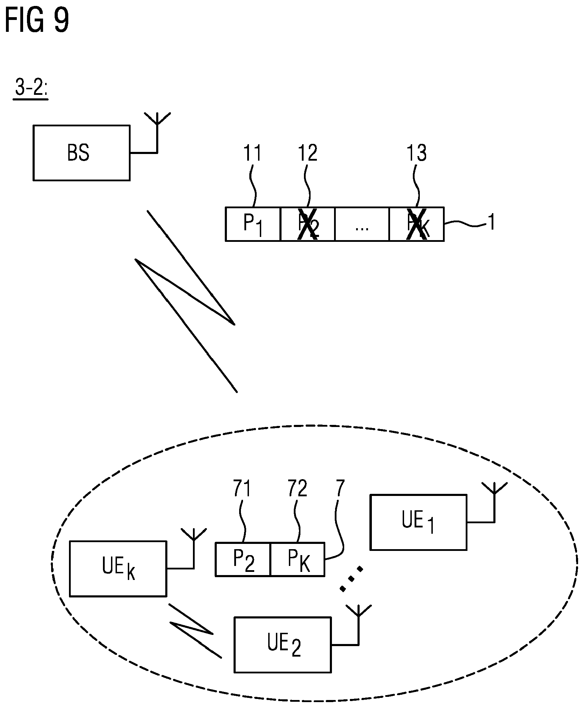

E.g. in case of a low(er) priority (201) UE, a base station BS, gNB can (after unsuccessful transmission of originally transmitted concatenation packet 1) transmit a UE specific (e.g. partial) re-transmitted packet (5 or 7 in **Fig. 8**, **9**), e.g. comprising only one or some sub-packets 52 (identical to 12), 53 (identical to 13) of the originally sent packet 1 (as explained in more detail for **Fig. 8****)** - with (5) or without (7) additional sub-packets (sub-packets 54, 55 transmitted now the first time and added to re-transmitted sub-packets 52 (=12), 53 (=13) in a packet 5).

If (as here) a gNB MAC layer doesn't buffer UE specific (sub-) packets, it can take re-transmission (sub-)packets from the RLC buffer (in a step S2) of the network or base station. To receive such (sub-)packet(s), e.g. MAC provides an indication to RLC.

On the other hand, if a base station BS, gNB is (fully, i.e. e.g. but not only, too overloaded to retransmit full packets in all cases etc) overloaded, then it e.g. will re-transmit to a UE with a transmitted UE specific (e.g. partial) packet. For example, overload indication can be specified as one bit use for overload status such that gNB is fully or not overloaded.

A base station's BS, gNB overload status can be broadcast through a system information message and a terminal device UE can expect a UE specific (re-transmission) packet from a (first / originally transmitted) full concatenation packet if bit 0 in system information (from a base station BS) is received (at the terminal device UE).

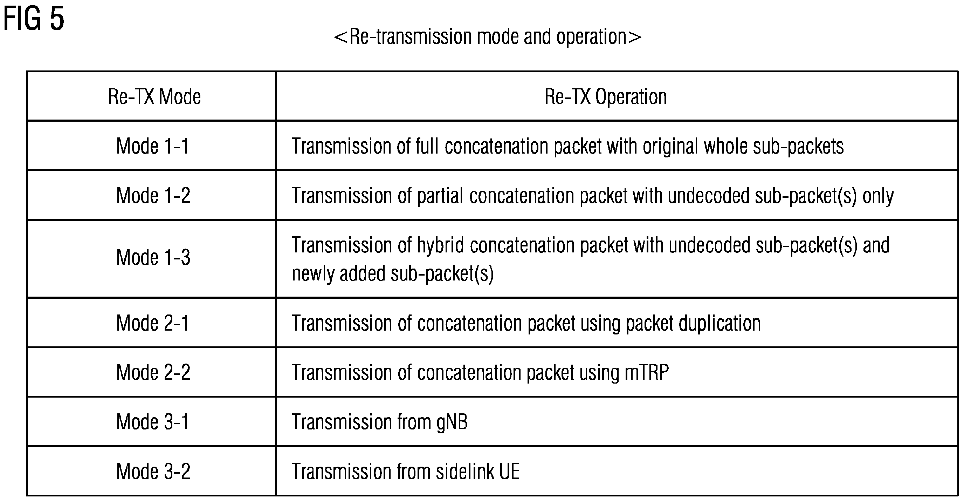

**Fig. 5** shows a table of a base station BS, gNB and/or terminal behavior policy, which provides concatenation packet re-transmission modes for different implementation scenarios.

In the table in Fig. 5, for each re-transmission mode, a re-transmission operation is defined by one or a combination of at least two or a combination of three alternatives of the following three modes:
- Mode 1 (1-1 or 1-2 or 1-3): defines re-transmission concatenation packet types, e.g.
   --either as mode 1-1 defines a re-transmission with a transmission of at least one re-transmission packet 6 being equal to the full originally transmitted concatenation packet 1, wherein all sub-packets 61, 62, .., 63 of the re-transmission packet 6 respectively are equal to one of the sub-packets 11, 12, .., 13 of the original concatenation packet 1 (61=11, 62=12, 63=13) as in **Fig. 7****,** wherein all sub-packets 11, 12, 13 of the original concatenation packet 1 are also in the re-transmission packets 5 (or 7),
   --or as mode 1-2 defines a re-transmission with a transmission of at least one part of the full originally transmitted concatenation packet 1, with only some of the sub-packets 11, 12 of the original concatenation packet 1 being equal to (copied to) sub-packets 51, 52 in **Fig. 8** (or 71, 72 in **Fig. 9****)** of the re-transmission packet 5 (or 7 in **Fig. 9****),** wherein not all sub-packets 13 of the original concatenation packet 1 are also in the re-transmission packets 5 (or 7),
   --or as mode 1-3 defines a re-transmission with a transmission of at least one hybrid re-transmission packet 5 only partially equal to the full originally transmitted concatenation packet 1, wherein sub-packets 52, 53 of the re-transmission packet 5 respectively are equal to one of the sub-packets 12, 13 of the original concatenation packet 1 (52=12, 53=13) as in **Fig. 8****,** wherein only some but not all sub-packets 11, 12, 13 of the original concatenation packet 1 are also in the re-transmission packets 5, and wherein some new (first time sent) sub-packets 54, 55 are added on the packet 5.
- Mode 2: defines radio access re-transmission schemes types, e.g.
   -- as mode 2-1 defines a re-transmission with a transmission of at least one packet (5 or 6 or 7) using packet duplication, i.e. a re-transmission packet being transmitted twice (as re-transmission packet 6 and also same re-transmission packet 8), e.g. for improved transmission reliability, e.g. packet transmission from the same BS or two different BSs for the same packet,
   --and/or as mode 2-2 defines a re-transmission with transmission of packet(s) (5 or 6 or 7) using mTRP (multi-TRP as such known in 3GPP, e.g. to be found in internet),
- Mode 3: defines re-transmission sources, e.g.
   --either as mode 2-1 defines a re-transmission from a base station BS, gNB
   --and/or as mode 2-2 defines a re-transmission from a terminal device (UE).

Also different combinations of re-transmission mode selection are offered for different concatenation packet profile indexes with key metrics such as UE priority (priority level, e.g. high or low or between) 201 and gNB overload status level. Priority (priority level, e.g. high or low or between) 201 level as key metric e.g. reflects specific applications QoS profile for packet data characteristics (e.g., 5QI - 5G QoS Identifier). Key metrics for a re-transmission mode selection can be flexibly configured e.g. according to applications QoS requirements. Re-transmission mode selection options can also be re-configurable based on prioritized selection and mode 2 for radio access re-transmission schemes (i.e., mTRP, duplication) can be selectively combined with mode 1 and mode 3 selections.

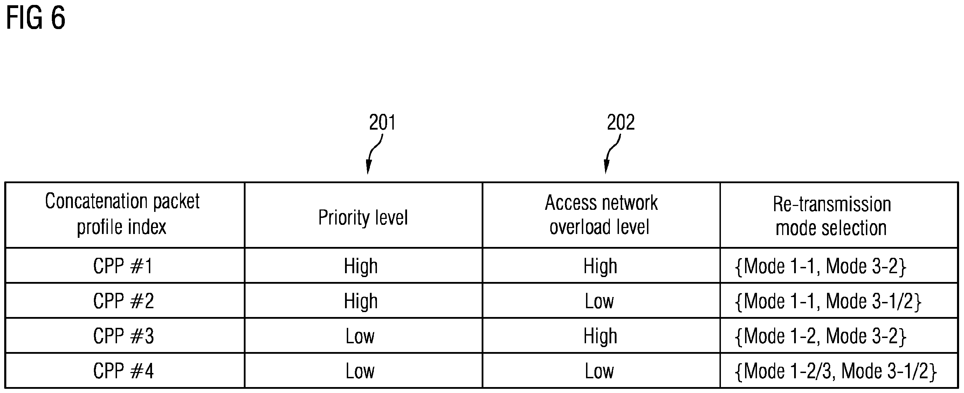

A re-transmission mode selection (of here only Mode 1 and Mode 3, possibly combined with Mode 2) can e.g. be based on a re-transmission mode operation table as e.g. the table in **Fig. 6****.**

In **Fig. 6** the table indicates an example of combination of re-transmission mode selection according to e.g. a concatenation packet profile index
- with key metrics such as UE priority 201 (e.g. high UE priority being a real-time application as real-time streaming, low UE priority being a non-real-time application as non-real-time data transmission)
- and with base station BS, gNB overload status level (base station BS, gNB overloaded especially due to retransmission requests from UEs or base station BS, gNB not being overloaded especially due to retransmission requests from UEs):
   - Priority (priority level, e.g. high or low or between) 201 level as key metric e.g. reflects specific applications QoS profile for packet data characteristics (e.g., 5QI)
   - Key metrics for re-transmission mode selection can be flexibly configured according to applications QoS requirements.

A concatenation packet profile index CPP *#*1 can e.g. be set by a base station or other mobile network entity.

Re-transmission mode selection for modes 1 and 3 here is based on re-transmission mode operation table.

Re-transmission mode selection options can be also re-configurable based on prioritized selection.

For a re-transmission mode, Mode 2 (e.g. either mode 2-1 or mode 2-2 of Fig. 5) for radio access re-transmission schemes (e.g. mTRP or duplication) can be selectively combined with mode 1 and mode 3 selections chosen as e.g. in the table in Fig. 6. So to choose a transmission mode, e.g. Mode 1 and 3 can be chosen as in Fig. 6 and Mode 2 can be chosen as additionally desired or possible in the network.

In **Fig. 6****,** e.g. in case of a (e.g. UE and/or BS, gN, gMB detected) a concatenation packet profile index CPP *#*1 representing
- high (UE) priority (priority level, e.g. high or low or between) 201 level and
- high access network overload level high,
a re-transmission mode selection of Mode 1-1 and of Mode 3-2 can be done (and Mode 2-1 or Mode 2-2 depending on e.g. other criteria).

In **Fig. 6****,** e.g. in case of a (e.g. UE and/or BS, gN, gMB detected and/or in concatenation packet context or concatenation packet signaling or concatenation packets) a concatenation packet profile index CPP #2 representing
- a high (UE) priority (priority level, e.g. high or low or between) 201 level and
- low access network overload level,
a re-transmission mode selection of Mode 1-1 and (depending on other criteria or just the first one) of Mode 3-1 or 3-2 can be done (and Mode 2-1 or Mode 2-2 depending on e.g. other criteria).

In **Fig. 6****,** e.g. in case of a (e.g. UE and/or BS, gN, gMB detected) a concatenation packet profile index CPP #3 representing
- low (UE) priority (priority level, e.g. high or low or between) 201 level and
- high access network overload level high,
a re-transmission mode selection of Mode 1-2 and of Mode 3-2 can be done (and Mode 2-1 or Mode 2-2 depending on e.g. other criteria).

In **Fig. 6****,** e.g. in case of a (e.g. UE and/or BS, gN, gMB detected) a concatenation packet profile index CPP #4 representing
- a low (UE) priority (priority level, e.g. high or low or between) 201 level and
- low access network overload level,
a re-transmission mode selection of (depending on other criteria or just the first one) Mode 1-1 or 1-2, and of (depending on other criteria or just the first one) of Mode 3-1 or 3-2 can be done (and Mode 2-1 or Mode 2-2 depending on e.g. other criteria).

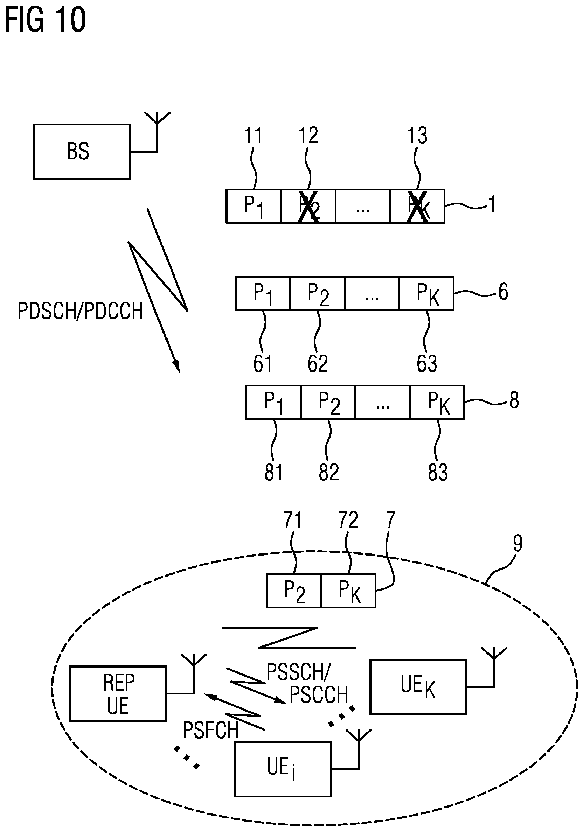

**Fig. 10** shows details of an embodiment of a re-transmission in a groupcast of one or more concatenation packets:
Fig. 10 shows a first or original transmission of a concatenation packet 1 (comprising sub-packets 11, 12, .., 13) from a base station device BS, gNB to (each of) a group of terminal devices UE1, UE2, ..., UEk,
and (after e.g. an unsuccessful transmission or unsuccessful receipt at a terminal device and e.g. a non-acknowledgement NACK) a re-transmission with a transmission of a (e.g. full or here) partial concatenation packet 7 and/or sub-packets 71, 72 from terminal device RepUE to (one or several or all further ones of) the group of terminal devices UEs.

In Fig. 10 at least more than one of the terminal devices UE1, UE2 (in the downlink cluster and/or group) can reach each other using sidelink.

Initially, a base station BS, gNB schedules for a downlink DL a concatenation packet transmission for a group and/or set of UEs (UE1, UE2, .., UEk).

A subset of terminal devices UE (UE1, UE2, .., UEk) for one or more DL (downlink) concatenation packet(s) 1, 6, are candidate UEs for a sidelink groupcast, especially in a re-transmission.

For a sidelink groupcast signaling of re-transmission (of 7), a base station BS, gNB receives (receipt strength / quality /error rate etc) measurement reports from terminal devices UE1, UE2, .. UEk,
and it determines to use for a re-transmission case a sidelink groupcast and/or to use for a re-transmission case a re-transmission to be sent from one (or at least two) of the terminal devices UE1, UE2, .. UEk,
e.g. from the one (UE) with the best measurement report - i.e. in case of a necessary re-transmission case terminal device UE shall send (as a sidelink) to other terminal devices UEs for the re-transmission packets.

A sidelink (= UE to UE instead of BS to UE) groupcast based re-transmission can be prioritized by default when it is available. Otherwise, gNB based re-transmission is chosen.

For the representing (re-transmitting) terminal device Uk (="TX UE" = aka "RepUE") in a sidelink groupcast, a base station BS, gNB e.g. initially assigns it to support (e.g. sidelink) re-transmissions for other groupcast terminal devices UE1, UE2, ... in case that there is any UE that reports NACK feedback to the "RepUE" terminal device (e.g. Uk).

The representing (re-transmitting) terminal device Uk (aka "RepUE") for a sidelink groupcast is initially determined by a base station BS, gNB e.g. based on DL (won link) link quality condition (e.g., UE with best CQI among UEs).

The representing (re-transmitting) terminal device Uk (aka "RepUE") can be re-assigned to other terminal devices UE1, UE2, ... in sidelink groupcast after initial setup based on sidelink feedback and a RepUE candidate list information transmission.

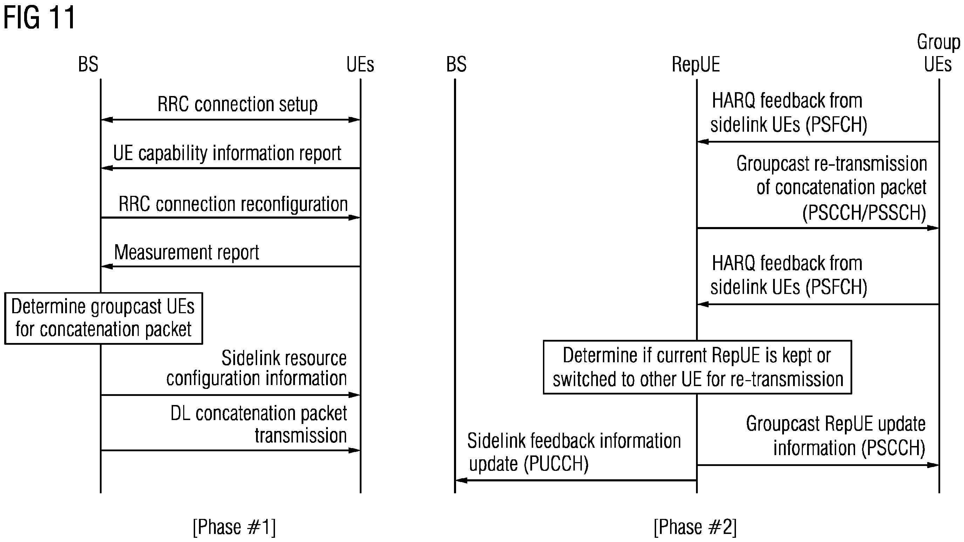

Fig. 11 shows details of an embodiment of signaling for a re-transmission in a cast or groupcast of one or more concatenation packets especially via a sideliink.

E.g. in a phase #1 (with communication between a base station BS and terminal devices UE (UE1, UE2, ..., UEk)), a base station BS sends to terminal devices UE (UE1, UE2, ..., UEk) RRC connection setup signaling information.

One or several terminal devices UE (UE1, UE2, ..., UEk) send to
a base station BS UE capability information report representing capabilities of several terminal devices UE (UE1, UE2, ..., UEk).

The base station BS sends to terminal devices UE (UE1, UE2, ..., UEk) RRC connection reconfiguration signaling information.

One or several terminal devices UE (UE1, UE2, ..., UEk) send to a base station BS a UE measurement information report representing a measured quality of e.g. receipt in terminal devices UE (UE1, UE2, ..., UEk).

The base station BS determines which (one or two or more) of the UEs of the terminal devices UE (UE1, UE2, ..., UEk) are intended recipients for a concatenation packet to be sent by the base station BS.

The base station BS sends to terminal devices UE (UE1, UE2, ..., UEk) sidelink resource configuration signaling information, regarding how to set up a sidelink connection.

The base station BS starts a DL (downlink) concatenation packets transmission to terminal devices UE (UE1, UE2, ..., UEk), i.e. the base station BS transmits via a downlink concatenation packet to terminal devices UE (UE1, UE2, ..., UEk).

E.g. in a phase #2, (with here communication between a base station BS and a representing terminal devices RepUE (e.g. former Uk) and further terminal devices UE (UE1, UE2, ..., UEk)),
sidelink UE(s) (= further terminal devices UE (UE1, UE2, ..., UEk)) e.g. transmit HARQ feedback to a representing terminal devices RepUE (e.g. former Uk) via e.g. a PSFCH channel.

A representing terminal device RepUE (e.g. former Uk) transmits to
sidelink UEs (= further terminal devices UE (UE1, UE2, ..., UEk)) a groupcast re-transmission of a concatenation packet via e.g. a PSCCH/PSSCH channel. Sidelink UEs (= further terminal devices UE (UE1, UE2, ..., UEk)) transmit HARQ feedback to a representing terminal devices RepUE (e.g. former Uk) via e.g. a PSFCH channel.

The representing terminal device RepUE (e.g. former Uk) determines whether the current terminal device RepUE (is kept as RepUE or whether a further terminal device is used / switched for another re-transmission.

A representing terminal device RepUE (e.g. former Uk) transmits to
sidelink UEs (= further terminal devices UE (UE1, UE2, ..., UEk)) Groupcast RepUE update information via e.g. a PSSCH channel.

A representing terminal device RepUE (e.g. former Uk) transmits to a base station BS Sidelink Feedback information update via e.g. a PUCCH channel.

Generally it is also possible to (at a receiving terminal device) combine a sub-packet (or a packet) from sub-packets (or packets) fragments (parts /bits/bytes) each only partially decoded/received in two or more transmissions/ re-transmissions, e.g. if two times at least one same sub-packet (or packet) is transmitted more than one time.

E.g. sub-packets and whole packets 1, 6 (10) are fully re-transmitted in Fig. 7, 10. E.g. sub-packets 51, 52 or 71, 72 are re-transmitted in Fig. 8 or 9.

Combining of sub-packets or packets can e.g. be done be soft combining, e.g. by FIR or PIR or CC as already standardized in 3GPP for LTE, or otherwise.

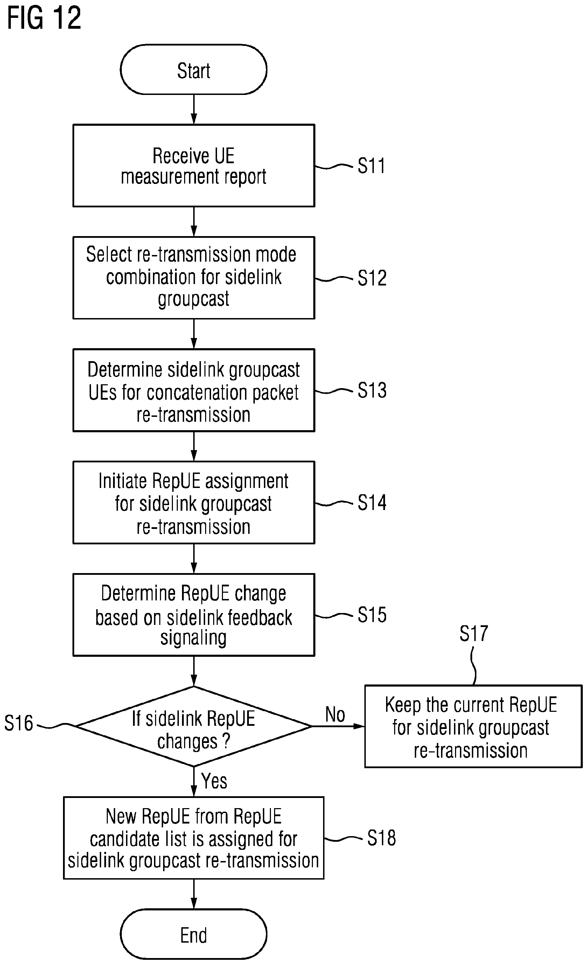

**Fig. 12** shows an embodiment of steps S11-S18 of a re-transmission in a groupcast (of originally a base station to more than one i.e. a group of terminal devices), representing what Fig. 11 also shows.

Sidelink groupcast UEs are served for re-transmission of concatenation packet by RepUE that is initially assigned by gNB based on link quality condition.

After groupcast re-transmission to sidelink UEs, a representing terminal device RepUE is determined to be kept or switched to other UE based on sidelink feedback and RepUE candidate list information.

When a representing terminal device RepUE is switched to other UE in groupcast re-transmission, re-transmission mode selection is updated for further re-transmissions.

One or more specific threshold values can be configured such as
- A maximum number of representing terminal device RepUE changes in sidelink groupcast for concatenation re-transmission and/or
- A maximum number of representing terminal device RepUE candidate list for resource configuration.

Some preferred main embodiments can also e.g. be as follows.

### Embodiment 1:

E.g. a new RNTI is proposed to be added for sidelink groupcast based concatenation packet and it is defined as SCG-RNTI (Sidelink Concatenation Groupcast RNTI).

It is a unique identifier used for identifying sidelink groupcast terminal devices UEs served for concatenation packet transmission and reception. A base station (node) BS, gNB can assign SCG-RNTI values to each terminal device UEs or to those that belong to a sidelink groupcast of a concatenation packet 1.

### Embodiment 2:

E.g. initially, a base station gNB schedules DL concatenation packet transmission for a set of terminal devices UEs. A subset of terminal devices UEs for a DL concatenation packet can be candidate terminal devices UEs for at least one sidelink groupcast.

For sidelink groupcast signaling, a base station gNB receives measurement reports from terminal devices UEs and determines sidelink groupcast terminal devices UEs for a re-transmission case. Sidelink groupcast based re-transmission can be prioritized by default when it is available. Otherwise, a base station gNB based re-transmission is chosen. For a sending terminal device (aka TX UE, especially aka RepUE) in a sidelink groupcast, a base station gNB initially assigns it to support re-transmissions for other groupcast terminal devices UEs in case that there is any terminal device UE(s) that report e.g. a NACK feedback to the terminal device RepUE that for sidelink groupcast is initially determined by base station gNB based on DL link quality condition (e.g., best CQI among UEs).

A terminal devices RepUE can be re-assigned to other terminal devices UE in a sidelink groupcast after initial setup based on sidelink feedback and a terminal devices RepUE candidate list information can be configured by a base station gNB. A block diagram for a DL concatenation packet transmission for a set of terminal devices UEs in sidelink groupcast is described as in **Fig. 11****.**

### Embodiment 3:

As **Fig. 11** shows, the signaling flows for the proposed concatenation packet transmission for a set of terminal devices UEs in a sidelink groupcast are shown in two phases as follows.

For a Phase 1, a base station gNB and a set of terminal devices (receiving=RX) Rx UEs are formed or determined to transmit a concatenation packet with determination of a sidelink groupcast use. During this phase, a terminal devices RepUE candidate list is also provided to sidelink groupcast UEs terminal devices, so that a terminal devices RepUE role can be transferred to one of UEs in the groupcast.

For a Phase 2, concatenation packet re-transmission is signaled between (representing and or retransmitting) terminal device(s) RepUE and (Rx= receiving re-transmission(s)) terminal devices Rx UEs. During this phase, sidelink feedback transmissions are used for a RepUE change and sidelink feedback information is also updated to the base station gNB.

### Embodiment 4:

E.g. sidelink groupcast terminal devices UEs are served for re-transmission of concatenation packet by a terminal device RepUE that is initially assigned by a base station gNB based on channel link quality condition. After groupcast re-transmission to sidelink (receiving) terminal devices UEs, a (representing) terminal device RepUE is determined to be kept or switched to other terminal devices UE based on sidelink feedback(s) and a RepUE candidate list information configured by a base station gNB. When a terminal devices RepUE is switched to other terminal devices UE in groupcast re-transmission, re-transmission mode selection is updated for further re-transmissions. A specific threshold values can be configured such as:
- max number of terminal device RepUE changes in sidelink groupcast for concatenation re-transmission
- max number of terminal devices RepUE in a candidate list for resource configuration

The flow chart for an embodiment of a RepUE assignment and of a sidelink groupcast re-transmission is shown in **Fig. 11****.**

### Embodiment 5:

E.g. a sidelink groupcast RepUE change process is described as follows. First, a list of Rx terminal devices UEs for concatenation packet reception in sidelink groupcast is defined as {UE1, UE2, ..., UEK}.

Sidelink groupcast terminal devices RepUE candidates are also set as {UEa, UEb, UEc, ...} from a list of Rx UEs.

The number of terminal devices RepUE candidates is pre-configured by the base station gNB and RepUE selection is based on e.g. link quality feedback information. Each step of sidelink groupcast RepUE change is e.g. processed as follows:
- Step#1 - a base station gNB initially assigns RepUE among RX UE list for sidelink groupcast re-transmission based on link quality level comparison.
- Step#2 - a base station gNB also selects additional RepUE candidate(s) in case the initial RepUE is switched to other UE for its role.
- Step#3 - After a sidelink groupcast re-transmission, sidelink feedback information is referenced to trigger RepUE change.
- Step#4 - Once RepUE change is updated, sidelink groupcast re-transmission resumes.

Criteria of RepUE change is based on key configuration parameter set such as
- Sidelink channel quality information: best link quality between RepUE and Rx UEs is measured)
- Max number of HARQ NACK feedback from Rx UEs: RepUE change to be triggered if NACK feedback threshold is met
- RepUE re-transmission capability condition: current RepUE can trigger RepUE change if re-transmission capability condition is not met (e.g. due to buffer status, mobility, power, etc.)

### Embodiment 6:

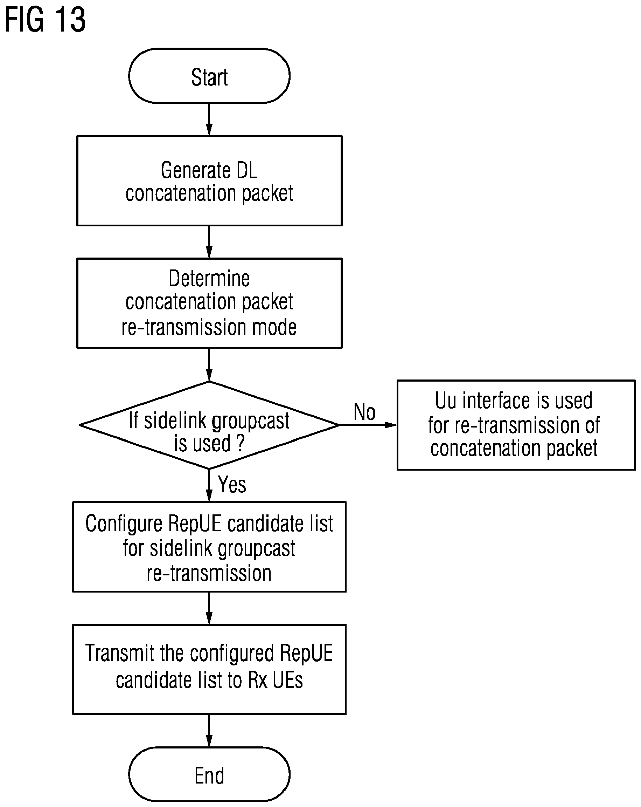

To reduce RepUE terminal devices change process complexity, an alternative approach is also proposed. For a downlink DL concatenation packet, all Rx UEs can be RepUE candidates and RepUE can be autonomously changed to next RepUE candidate when a NACK feedback is received in a sidelink groupcast mode. Therefore, every Rx UE can then be rotated to be RepUE and NACK feedback transmission to RepUE among Rx UEs triggers RepUE change. The order of a RepUE candidate list can be pre-configured by a base station gNB based on link quality condition comparison between each Rx UE and gNB. The flow chart for this operation about reducing RepUE change process complexity is shown as in **Fig. 13****.** Since sidelink groupcast configurations can vary for concatenation packet re-transmission scenarios, a base station gNB can schedule a concatenation packet with multiple sub-packets for
- Single terminal device UE only: concatenation packet consists of sub-packets that belong to a single terminal device UE
- Multiple terminal devices UE (equivalently, single groupcast UEs): a concatenation packet consists of sub-packets that belong to multiple terminal devices UE
- Multiple clustered terminal devices UE groups: concatenation packet consists of sub-packets that belong to multiple UEs from different clusters.

How to schedule a concatenation packet for the above scenarios depends on base station gNB implementation and this should be flexibly configurable based on concatenation packet criteria. However, the proposed re-transmission modes for concatenation packet re-transmission can be applied to all different scenarios. In case of multiple clustered terminal devices UE groups, different terminal devices UE clusters can exchange concatenation packet re-transmissions as well.

(In **Fig. 14** the diagrams show the three different scenarios for concatenation packet transmission as described above.)

Also, based on the above three different concatenation packet transmission scenarios, a high-level concatenation packet format is described below for each scenarios.

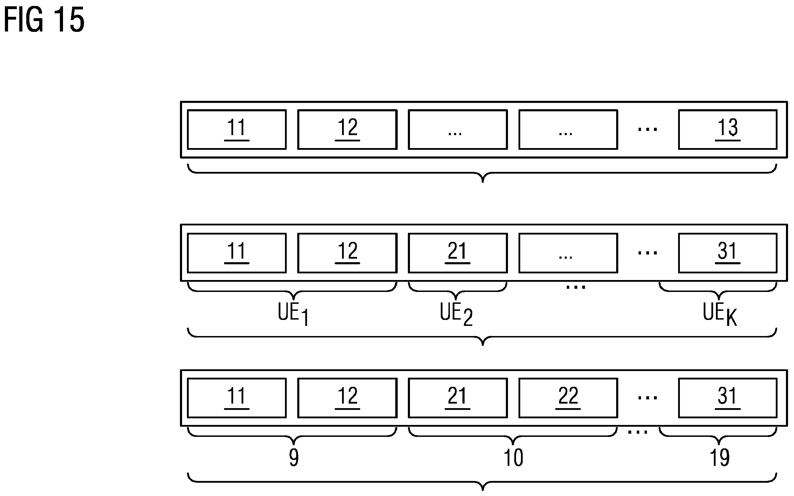

**Fig. 15** shows some exemplary structure of concatenation packets for single UE, multiple UEs and multiple UE cluster concatenation packet transmission /re-transmission as in Fig. 14,
in Fig. 15 on top a single terminal equipment (UE) concatenation packet,
in Fig. 15 in the middle a multiple terminal equipment (UE) concatenation packet,
in Fig. 15 at the bottom of the Fig. a multiple cluster terminal equipment (UE) concatenation packet.

In Fig. 15 on top a single terminal equipment (UE) concatenation packet only comprises sub-packets 11, 12, 13 intended for one single terminal equipment UE1. In Fig. 15 in the middle a multiple terminal equipment (UE) concatenation packet comprises sub-packets 11, 12, 21, 31 intended more than one single terminal equipment (UE), i.e. e.g. a group of terminal equipments UE1, UE2, ..., UEk.

In Fig. 15 at the bottom a multiple cluster terminal equipment (UE) concatenation packet comprises sub-packets 11, 12, 13, 21, 31 intended for more than one cluster of single terminal equipments (UE), i.e. e.g. for at least two groups 9, 10, 19 of terminal equipments UE1, UE2, ..., UEk.

### Reference signs

1 concatenated (e.g. originally / originally transmitted) packet
11, 12, 13 sub-packets of 1
2 concatenated (e.g. originally / originally transmitted) packet
21, 22, 23 sub-packets of 2
3 concatenated (e.g. originally / originally transmitted) packet
31, 32, 33 sub-packets of 3
5 concatenated (e.g. originally / re- transmitted) packet
51, 52, 53 sub-packets of 6
6 concatenated (e.g. originally / re- transmitted) packet
61, 62, 63 sub-packets of 6
7 concatenated (e.g. originally / re- transmitted) packet
71, 72, 73 sub-packets of 7
8 concatenated (e.g. originally / re- transmitted) packet
81, 82, 83 sub-packets of 8
9 group (of UE1, UE2, UEk terminal devices) re-transmission Groupcast of Concatenation Packet
100 (cellular) telecommunication network
BS base station device; e.g. gNB or BS
UE1, UE2, ..., UEk terminal devices
Uu link (data and/ or signaling transmission channels) BS<-> UE(s)
PC5 (data and/ or signaling transmission channels) UE <-> UE
S1 concatenation re-transmit step: generate re-transmission criteria for concatenation packet
S2 concatenation re-transmit step: receive tr-transmission request regarding concatenation packet
S3 concatenation re-transmit step: determine concatenation re-transmission mode
S4 concatenation re-transmit step: re-transmit concatenation packet
1-1, 1-2, 1-3 Mode 1 of transmission mode
2-1, 2-2 Mode 2 of transmission mode
3-1, 3-2 Mode 3 of transmission mode
S11-S18 steps of a concatenation transmission / re- transmission with a side link

## Claims

1. Method for re-transmission (5; 6; 7; 8) by a device (gNB, BS, UE; UE1, UE2, UEk) of a telecommunication network (100),
after a transmitted original concatenation packet (1; 2 ; 3),
wherein an original concatenation packet (1; 2; 3) comprises several sub-packets (11, 12, 13; 21, 22, 23; 31, 32, 33),
wherein based on re-transmission criteria (201, 202), a decision on a re-transmission mode (1-1; 1-2; 1-3; 2-1; 2-2; 3-1; 3-2) is made (gNB, BS; UE1, UE2, ..., UEk), the re-transmission mode (1-1; 1-2; 1-3; 2-1; 2-2; 3-1; 3-2) defining how to transmit at least one re-transmission concatenation (5; 6; 7;8) packet,
wherein transmission of at least one re-transmission concatenation packet (5; 6; 7; 8) by a base station device (gNB, BS) or a terminal device (UE) to at least one terminal device (UE1, UE2, ...)
is done after a transmission failure indication (NACK; no ACK) representing at least one failed transmission (1; 2; 3) of an original concatenation packet (1; 2; 3) and/or sub-packet (11, 12, 13; 21, 22, 23; 31, 32, 33) to at least one terminal device (UE1, UE2,...).

2. Method according to claim 1,
wherein the preferably stored re-transmission criteria comprise one or two or three or four of:
- a terminal device (UE1, UE2, ..., UEk) priority (201),
- a terminal device (UE1, UE2, ..., UEk) latency budget (201),
- a base station (gNB, BS) overload status (202),
- criteria according to a target concatenation packet Quality Of Service or QoS profile category of transmission of concatenation packets (1; 2; 3).

3. Method according to any of the preceding claims,
wherein a re-transmission mode (1-1; 1-2; 1-3; 2-1; 2-2; 3-1; 3-2,...) of the base station (gNB, BS) comprises one or two or three or more of:
- a first mode (Mode 1) representing re-transmission concatenation packet types, especially either
--re-transmission of at least one full concatenation packet (6) with original (11, 12, 13) and/or whole sub-packets (61, 62, 63) in the re-transmission or
--re-transmission of at least one only at least one partial concatenation packet (5, 7) with preferably at the original transmission undecoded (NACK) sub-packets (52; 53; 71, 72) or
--re-transmission of at least one hybrid concatenation packet (5) with preferably at the original transmission undecoded (NACK) sub-packets (52, 53) and/or additionally with newly added sub-packet(s) (54, 55),
- a second mode (Mode 2) : representing radio access re-transmission schemes, especially either
--re-transmission of at least one concatenation packet (6, 8) using packet duplication (6, 8) or
--re-transmission of at least one concatenation packet using mTRP or multiple Transmission and Reception Point transmission,
- a third mode (Mode 3) representing a re-transmission concatenation packet source (gNB, BS; UE1, UE2, ..., UEk), especially
--re-transmission of at least one concatenation packet from a base station (gNB, BS) device or
--re-transmission of at least one concatenation packet from a terminal device (RepUE).

4. Method according to any of the preceding claims,
wherein a re-transmitted concatenation packet (5; 6; 7; 8) comprises either all or less than all of the sub-packets (11, 12, 13; 21, 22, 23; 31, 32, 33) transmitted in the original transmitted concatenation packet (1; 2; 3).

5. Method according to any of the preceding claims,
wherein a re-transmitted concatenation packet (6; 7) comprises either only sub-packets (61, 62, 63; 72, 73) transmitted in the original transmitted concatenation packet (1; 2; 3),
or sub-packets (52, 53) transmitted in the original transmitted concatenation packet (1) and new sub-packets (54, 55) that were not transmitted in the original transmitted concatenation packet (1).

6. Method according to any of the preceding claims,
wherein an original concatenation packet (1; 2; 3) is sent by a base station (gNB, BS) device
and wherein a re-transmitted concatenation packet (5; 6; 7; 8) is sent by a terminal device (RepUE; UE1, UE2, ..., UEk) and received by one or at least two terminal devices (UE1, UE2, ..., UEk).

7. Method according to any of the preceding claims,
wherein an original concatenation packet (1; 2; 3) is sent by a base station (gNB, BS) device to one terminal device or a group of terminal devices (UE1, UE2, ..., UEk) of a telecommunication network (100),
and wherein a re-transmitted concatenation packet (5; 6; 7; 8) is sent by the base station (gNB, BS) device to one or (9) more terminal devices (UE1, UE2, ..., UEk).

8. Method according to the preceding claim,
and wherein a terminal device (RepUE; Uk), determined to re-transmit a concatenation packet (7) to one or more of the named group's (9) terminal devices (UEs), is defined by a base station (gNB, BS) device in a message (SCG-RNTI: Sidelink Concatenation Groupcast RNTI) from the base station (gNB, BS) device to this terminal device (RepUE, Uk).

9. Method according to any of the preceding claims,
wherein the original concatenation packet (1; 2; 3) is sent by a base station (gNB, BS) device to more than one group of terminal devices (UE1, UE2, ..., UEk),
and wherein the re-transmitted concatenation packet (5; 6; 7; 8) is sent by the base station (gNB, BS) device or by a terminal device (RepUE; UE1, UE2, ..., UEk) to to more than one group (9, 10, 19) of terminal devices (UE1, UE2, ..., UEk).

10. Method according to any of the preceding claims,
wherein a base station (gNB, BS) device chooses a terminal device (RepUE; UE1, UE2, ..., UEk) to send a re-transmission concatenation packet (5, 6, 7, 8) to one or more terminal devices (UE1, UE2, ..., UEk), based on receipt measurement reports that the base station (gNB, BS) device gNB received from at least one terminal device (RepUE; UE1, UE2, ..., UEk), especially after transmitting an original concatenation packet and/or a re-transmitted concatenation packet (5; 6; 7; 8) or sub-packet.

11. Method according to any of the preceding claims,
wherein a base station (gNB, BS) device chooses a terminal device (RepUE; UE1, UE2, ..., UEk) to fully or partially re-transmit the original concatenation packet (1; 2; 3) as a re-transmitted concatenation packet (5; 6; 7; 8) to one or more terminal devices (UE1, UE2, ..., UEk),
and wherein the base station (gNB, BS) device informs, with a message (SCG-RNTI), at least one terminal device (RepUE; UE1, UE2, ..., UEk), to which it sent the original concatenation packet (1; 2; 3), which terminal device (RepUE) will fully or partially re-transmit the original concatenation packet (1; 2; 3) as a re-transmit concatenation packet (5, 6, 7, 8) to one or more terminal devices (UE1, UE2, ..., UEk).

12. Method according to any of the preceding claims,
wherein a base station (gNB, BS) device having determined (SCG-RNTI, RNTI) a terminal device (RepUE; UE1, UE2, ..., UEk) to fully or partially re-transmit the original concatenation packet (1; 2; 3) as a re-transmit concatenation packet (5, 6, 7, 8) to one or more terminal devices (UE1, UE2, ..., UEk),
depending on conditions determines another terminal device (RepUE; UE1, UE2, ..., UEk) to in the future fully or partially re-transmit the original concatenation packet (1; 2; 3) as a re-transmit concatenation packet (5, 6, 7, 8) to one or more terminal devices (UE1, UE2, ..., UEk),
wherein preferably this condition comprises new measurement results receipt of transmissions reported from terminal devices (UE1, UE2, ..., UEk) to the a base station (gNB, BS) device.

13. Method according to any of the preceding claims,
wherein after the original concatenation packet (1; 2; 3) was sent to a group of terminal devices (UE1, UE2, ..., UEk) of a telecommunication network (100), especially a cellular telecommunication network,
and after the re-transmitted concatenation packet (5; 6; 7; 8) was sent by the base station (gNB, BS) device or by a terminal device (RepUE; UE1, UE2, ..., UEk) to terminal devices (UE1, UE2, ..., UEk),
a re-re-transmitted concatenation packet (5; 6; 7; 8) is sent by the base station (gNB, BS) device or by a terminal device (RepUE; UE1, UE2, ..., UEk) to terminal devices (UE1, UE2, ..., UEk).

14. Method according to any of the preceding claims,
wherein a base station (gNB, BS) device informs sidelink groupcast terminal devices (RepUE; UE1, UE2, UEk) to be served with a re-transmitted concatenation packet (5; 6; 7; 8) transmission,
which terminal device (RepUE; UE1, UE2, UEk) was determined to fully or partially re-transmit the original concatenation packet (1; 2; 3) as a re-transmit concatenation packet (5, 6, 7, 8) to one or more of the named group's terminal devices (UE1, UE2, ..., UEk).

15. Method according to any of the preceding claims,
wherein a terminal device (RepUE; UE1, UE2, ..., UEk) that was in the past determined to fully or partially re-transmit the original concatenation packet (1; 2; 3) as a re-transmit concatenation packet (5, 6, 7, 8) to one or more of the named group's terminal devices (UE1, UE2, ..., UEk),
informs further terminal devices (RepUE; UE1, UE2, ..., UEk) by which other terminal device (RepUE; UE1, UE2, ..., UEk) the further terminal devices (RepUE; UE1, UE2, ..., UEk) will be served with a future re-transmitted concatenation packet (5; 6; 7; 8) transmission.

16. Device (gNB, BS, UEk; UE1, UE2, ..., UEk, 300),
configured to decide, based on re-transmission criteria (201, 202), on a re-transmission mode (1-1; 1-2; 1-3; 2-1; 2-2; 3-1; 3-2) representing how to transmit at least one re-transmission concatenation (5; 6; 7;8) packet after (gNB, BS; UE1, UE2, ..., UEk) a transmission failure indication (NACK; no ACK) representing at least one failed transmission of an original concatenation packet (1; 2; 3) and/or of a sub-packet (11-13, 21-23, 31-33) to at least one terminal device (UE1, UE2, ..., UEk).

17. Device (gNB, BS, UEk; UE1, UE2, ..., UEk), especially according to the preceding device claim,
configured to do and/or trigger a transmission of at least one re-transmission concatenation packet (5; 6; 7; 8) to at least one terminal device (UE1, UE2, ..., UEk) after (gNB, BS; UE1, UE2, ..., UEk) a transmission failure (NACK; no ACK) representing at least one failed transmission of an original concatenation packet (1; 2; 3) and/or of a sub-packet (11-13, 21-23, 31-33) to at least one terminal device (UE1, UE2, ..., UEk),
wherein a decided re-transmission mode (1-1; 1-2; 1-3; 2-1; 2-2; 3-1; 3-2) defines how to transmit the at least one re-transmission concatenation (5; 6; 7;8) packet.

18. Device (gNB, BS, UE; UE1, UE2, ..., UEk, 300) according to any of the preceding device claims,
wherein the re-transmission criteria comprise one or two or three or four of:
- a terminal device (UE1, UE2, UEk) priority (201),
- a terminal device (UE1, UE2, UEk) latency budget (201),
- a base station (gNB, BS) overload status (202),
- other criteria according to target concatenation packet QoS profile category of transmission of concatenation packets (1; 2; 3).

19. Device (gNB, BS, UE; UE1, UE2, ..., UEk, 300) according to any of the preceding device claims, wherein
the re-transmission mode of the base station device (gNB, BS) and/or terminal device (UE) comprises one or two or three or more of:
- a first mode (Mode 1) representing re-transmission concatenation packet types (6; 5,7), especially either
--re-transmission of at least one full concatenation packet (6) with original (11, 12, 13) and/or whole sub-packets (61, 62, 63) or
--re-transmission of at least one partial concatenation packet (5, 7) with preferably at the original transmission not received or undecoded (NACK) sub-packets (52; 53; 71, 72) or
--re-transmission of at least one hybrid concatenation packet (5) with preferably at the original transmission not received or undecoded (NACK; no ACK) sub-packets (52, 53) and with newly added sub-packet(s) (54, 55),
- a second mode (Mode 2) : representing radio access re-transmission schemes, especially either
--re-transmission of at least one concatenation packet (6, 8) using packet duplication (6, 8) or
--re-transmission of at least one concatenation packet using mTRP or multiple Transmission and Reception Point,
- a third mode (Mode 3) representing a re-transmission concatenation packet source, especially
--re-transmission of at least one concatenation packet from a base station (gNB, BS) device or
--re-transmission of at least one concatenation packet from a terminal device (UE1, UE2, ..., UEk).

20. Device (gNB, BS, UE; UE1, UE2, ..., UEk, 300) according to any of the preceding device claims, wherein
a re-transmitted concatenation packet (5; 6; 7; 8) comprises either all or less than all of the sub-packets (11, 12, 13; 21, 22, 23; 31, 32, 33) transmitted in the original transmitted concatenation packet (1; 2; 3).

21. Device (gNB, BS, UE; UE1, UE2, ..., UEk, 300) according to any of the preceding device claims, wherein
a re-transmitted concatenation packet (6; 7) comprises either only sub-packets (61, 62, 63; 72, 73) transmitted in the original transmitted concatenation packet (1; 2; 3), or sub-packets (52, 53) transmitted in the original transmitted concatenation packet (1) and newly added sub-packets (54, 55) that were comprised in the original transmitted concatenation packet (1).

22. Device (gNB, BS, UE; UE1, UE2, ..., UEk, 300) according to any of the preceding device claims,
wherein a base station (gNB, BS) device is configured to send an original concatenation packet (1; 2; 3)
and wherein a terminal device (RepUE; UE1, UE2, ..., UEk) of a telecommunication network (100) is configured to re-transmit a re-transmitted concatenation packet (5; 6; 7; 8) and wherein one or at least two terminal devices (UE1, UE2, ..., UEk) of the telecommunication network (100) are configured to receive the re-transmitted concatenation packet (5; 6; 7; 8).

23. Device (gNB, BS, UE; UE1, UE2, ..., UEk, 300) according to any of the preceding device claims,
wherein it comprises or is a base station (gNB, BS) device configured to send an original concatenation packet (1; 2; 3) to a group of terminal devices (UE1, UE2, ..., UEk),
and the base station (gNB, BS) device or at least one of the terminal devices (RepUE; UE1, UE2, ..., UEk) of the (9) terminal devices (UE1, UE2, ..., UEk) is configured to re-transmit a concatenation packet (5; 6; 7; 8) to a group of one or more of the terminal devices (UE1, UE2, ..., UEk).

24. Device (gNB, BS, UE; UE1, UE2, ..., UEk, 300) according to any of the preceding device claims,
wherein it comprises or is a base station (gNB, BS) device configured to determine a terminal device (RepUE; Uk) to re-transmit a concatenation packet (7) to one or more of the terminal devices (UEs), especially in a message (SCG-RNTI: Sidelink Concatenation Groupcast RNTI) from the base station (gNB, BS) device to at least this terminal device (RepUE, Uk).

25. Device (gNB, BS, UE; UE1, UE2, ..., UEk, 300) according to any of the preceding device claims,
wherein it comprises or is a base station (gNB, BS) device configured to send the original concatenation packet (1; 2; 3) to more than one group of terminal devices (UE1, UE2, ..., UEk) of a telecommunication network,
and wherein a base station (gNB, BS) device or a terminal device (RepUE; UE1, UE2, ..., UEk) is configured to send the re-transmitted concatenation packet (5; 6; 7; 8) to more than one group (9, 10, 11) of terminal devices (UE1, UE2, ..., UEk).

26. Device (gNB, BS, UE; UE1, UE2, ..., UEk, 300) according to any of the preceding device claims,
wherein it comprises or is a base station (gNB, BS) device configured to determine a terminal device (RepUE; UE1, UE2, ..., UEk) that is determined to send a re-transmission concatenation packet (5, 6, 7, 8) to one or more of especially a group's (9) terminal devices (UE1, UE2, ..., UEk), based on receipt measurement reports that the base station (gNB, BS) device gNB received from at least one terminal device (RepUE; UE1, UE2, ..., UEk), especially after transmitting of an original and/or a re-transmitted concatenation packet (5; 6; 7; 8).

27. Device (gNB, BS, UE; UE1, UE2, ..., UEk, 300) according to any of the preceding device claims,
wherein it comprises or is a base station (gNB, BS) device configured to determine a terminal device (RepUE; UE1, UE2, ..., UEk) to fully or partially re-transmit the original concatenation packet (1; 2; 3) as a re-transmit concatenation packet to one or more of especially a group's terminal devices (UE1, UE2, ..., UEk),
a base station (gNB, BS) device is configured to inform with a message (SCG-RNTI) at least one terminal device (RepUE; UE1, UE2, ..., UEk), to which it sent the original concatenation packet (1; 2; 3), which terminal device (RepUE) is determined to fully or partially re-transmit the original concatenation packet (1; 2; 3) as a re-transmit concatenation packet (5, 6, 7, 8) to one or more of especially the group's terminal devices (UE1, UE2, ..., UEk).

28. Device (gNB, BS, UE; UE1, UE2, ..., UEk, 300) according to any of the preceding device claims,
wherein it comprises or is a device (gNB, BS) configured to, after having determined (SCG-RNTI, RNTI) a terminal device (RepUE; UE1, UE2, ..., UEk) to fully or partially re-transmit an original concatenation packet (1; 2; 3) as a re-transmit concatenation packet (5, 6, 7, 8),
further determine depending on conditions another terminal device (RepUE; UE1, UE2, ..., UEk) to in the future fully or partially re-transmit an original concatenation packet (1; 2; 3) as a re-transmit concatenation packet (5, 6, 7, 8),
wherein preferably this condition comprises one or more new measurement results reported from one or more terminal devices (UE1, UE2, ..., UEk) to the device (gNB, BS).

29. Device (gNB, BS, UE; UE1, UE2, ..., UEk, 300) according to any of the preceding device claims, wherein
it is a base station (gNB, BS) device or a terminal device (RepUE; UE1, UE2, ..., UEk) and it is configured to send re-re-transmitted concatenation packet (5; 6; 7; 8) to terminal devices (UE1, UE2, ..., UEk)
after the original concatenation packet (1; 2; 3) was sent by a base station (gNB, BS) device to a group of terminal devices (UE1, UE2, ..., UEk) of a telecommunication network (100), especially a cellular telecommunication network,
and after the re-transmitted concatenation packet (5; 6; 7; 8) was sent by a base station (gNB, BS) device or by a terminal device (RepUE; UE1, UE2, ..., UEk) to terminal devices (UE1, UE2, ..., UEk).

30. Device (gNB, BS, UE; UE1, UE2, ..., UEk, 300) according to any of the preceding device claims, wherein
it (gNB, BS) is configured to inform sidelink groupcast terminal devices (RepUE; UE1, UE2, ..., UEk) to be served with a re-transmitted concatenation packet (5; 6; 7; 8) transmission,
which terminal device (RepUE; UE1, UE2, ..., UEk) was determined to fully or partially re-transmit the original concatenation packet (1; 2; 3) as a re-transmit concatenation packet (5, 6, 7, 8) to one or more of especially a group's terminal devices (UE1, UE2, ..., UEk).

31. Device (gNB, BS, UE; UE1, UE2, ..., UEk, 300) according to any of the preceding device claims,
wherein it is a terminal device (RepUE; UE1, UE2, ..., UEk) that was in the past determined to fully or partially re-transmit the original concatenation packet (1; 2; 3) as a re-transmit concatenation packet (5, 6, 7, 8) to one or more of the named group's terminal devices (UE1, UE2, ..., UEk),
and wherein it is configured to inform further terminal devices (RepUE; UE1, UE2, ..., UEk) by which other terminal device (RepUE; UE1, UE2, ..., UEk) the further terminal devices (RepUE; UE1, UE2, UEk) will be served with a re-transmitted concatenation packet (5; 6; 7; 8) transmission.

32. Device according to any of the preceding device claims,
wherein the device comprises or is telecommunication network (100) or a base station (gNB, BS) or a terminal device (RepUE; UE1, UE2, ..., UEk), especially mobile phone, smartphone, metering device, car TCU, wearable, USB device or module.

## Amended claims

### Amended claims in accordance with Rule 137(2) EPC.

1. Method **characterized by** re-transmission (5; 6; 7; 8) by a device (BS, UE; UE1, UE2, UEk) of a telecommunication network (100),
after a transmitted original concatenation packet (1; 2 ; 3),
wherein an original concatenation packet (1; 2; 3) transmitted in a downlink from a base station to a terminal device (UE) comprises several sub-packets (11, 12, 13; 21, 22, 23; 31, 32, 33),
wherein based on re-transmission criteria (201, 202), a decision on a re-transmission mode (1-1; 1-2; 1-3; 2-1; 2-2; 3-1; 3-2) is made (BS; UE1, UE2, ... , UEk), the re-transmission mode (1-1; 1-2; 1-3; 2-1; 2-2; 3-1; 3-2) defining how to transmit at least one re-transmission concatenation (5; 6; 7;8) packet,
wherein transmission of at least one re-transmission concatenation packet (5; 6; 7; 8) by a base station device (BS) to at least one terminal device (UE1, UE2, ...) is done after a transmission failure indication (NACK; no ACK) representing at least one failed transmission (1; 2; 3) of an original concatenation packet (1; 2; 3) and/or sub-packet (11, 12, 13; 21, 22, 23; 31, 32, 33) to at least one terminal device (UE1, UE2,...).

2. Method according to claim 1,
wherein the preferably stored re-transmission criteria comprise one or two or three or four of:
- a terminal device (UE1, UE2, ..., UEk) priority (201),
- a terminal device (UE1, UE2, ..., UEk) latency budget (201),
- a base station (, BS) overload status (202),
- criteria according to a target concatenation packet Quality Of Service or QoS profile category of transmission of concatenation packets (1; 2; 3).

3. Method according to any of the preceding claims,
wherein a re-transmission mode (1-1; 1-2; 1-3; 2-1; 2-2; 3-1; 3-2, ...) of the base station (, BS) comprises one or two or three or more of:
- a first mode (Mode 1) representing re-transmission concatenation packet types, especially either
--re-transmission of at least one full concatenation packet (6) with original (11, 12, 13) and/or whole sub-packets (61, 62, 63) in the re-transmission or
--re-transmission of at least one only at least one partial concatenation packet (5, 7) with preferably at the original transmission undecoded (NACK) sub-packets (52; 53; 71, 72) or
--re-transmission of at least one hybrid concatenation packet (5) with preferably at the original transmission undecoded (NACK) sub-packets (52, 53) and/or additionally with newly added sub-packet(s) (54, 55),
- a second mode (Mode 2) : representing radio access re-transmission schemes, especially either
--re-transmission of at least one concatenation packet (6, 8) using packet duplication (6, 8) or
--re-transmission of at least one concatenation packet using mTRP or multiple Transmission and Reception Point transmission,
- a third mode (Mode 3) representing a re-transmission concatenation packet source (, BS; UE1, UE2, ..., UEk), especially
--re-transmission of at least one concatenation packet from a base station (, BS) device or
--re-transmission of at least one concatenation packet from a terminal device (RepUE).

4. Method according to any of the preceding claims,
wherein a re-transmitted concatenation packet (5; 6; 7; 8) comprises either all or less than all of the sub-packets (11, 12, 13; 21, 22, 23; 31, 32, 33) transmitted in the original transmitted concatenation packet (1; 2; 3).

5. Method according to any of the preceding claims,
wherein a re-transmitted concatenation packet (6; 7) comprises either only sub-packets (61, 62, 63; 72, 73) transmitted in the original transmitted concatenation packet (1; 2; 3),
or sub-packets (52, 53) transmitted in the original transmitted concatenation packet (1) and new sub-packets (54, 55) that were not transmitted in the original transmitted concatenation packet (1).

6. Method according to any of the preceding claims,
wherein an original concatenation packet (1; 2; 3) is sent by a base station (gNB, BS) device
and wherein a re-transmitted concatenation packet (5; 6; 7; 8) is sent by a terminal device (RepUE; UE1, UE2, ..., UEk) and received by one or at least two terminal devices (UE1, UE2, ..., UEk).

7. Method according to any of the preceding claims,
wherein an original concatenation packet (1; 2; 3) is sent by a base station (, BS) device to one terminal device or a group of terminal devices (UE1, UE2, ..., UEk) of a telecommunication network (100),
and wherein a re-transmitted concatenation packet (5; 6; 7; 8) is sent by the base station (, BS) device to one or (9) more terminal devices (UE1, UE2, ..., UEk).

8. Method according to the preceding claim,
and wherein a terminal device (RepUE; Uk), determined to re-transmit a concatenation packet (7) to one or more of the named group's (9) terminal devices (UEs), is defined by a base station (gNB, BS) device in a message (SCG-RNTI: Sidelink Concatenation Groupcast RNTI) from the base station (gNB, BS) device to this terminal device (RepUE, Uk).

9. Method according to any of the preceding claims,
wherein the original concatenation packet (1; 2; 3) is sent by a base station (gNB, BS) device to more than one group of terminal devices (UE1, UE2, ..., UEk),
and wherein the re-transmitted concatenation packet (5; 6; 7; 8) is sent by the base station (gNB, BS) device or by a terminal device (RepUE; UE1, UE2, ..., UEk) to to more than one group (9, 10, 19) of terminal devices (UE1, UE2, ..., UEk).

10. Method according to any of the preceding claims,
wherein a base station (gNB, BS) device chooses a terminal device (RepUE; UE1, UE2, ..., UEk) to send a re-transmission concatenation packet (5, 6, 7, 8) to one or more terminal devices (UE1, UE2, ..., UEk), based on receipt measurement reports that the base station (gNB, BS) device gNB received from at least one terminal device (RepUE; UE1, UE2, ..., UEk), especially after transmitting an original concatenation packet and/or a re-transmitted concatenation packet (5; 6; 7; 8) or sub-packet.

11. Method according to any of the preceding claims,
wherein a base station (gNB, BS) device chooses a terminal device (RepUE; UE1, UE2, ..., UEk) to fully or partially re-transmit the original concatenation packet (1; 2; 3) as a re-transmitted concatenation packet (5; 6; 7; 8) to one or more terminal devices (UE1, UE2, ..., UEk),
and wherein the base station (gNB, BS) device informs, with a message (SCG-RNTI), at least one terminal device (RepUE; UE1, UE2, ..., UEk), to which it sent the original concatenation packet (1; 2; 3), which terminal device (RepUE) will fully or partially re-transmit the original concatenation packet (1; 2; 3) as a re-transmit concatenation packet (5, 6, 7, 8) to one or more terminal devices (UE1, UE2, ..., UEk).

12. Method according to any of the preceding claims,
wherein a base station (gNB, BS) device having determined (SCG-RNTI, RNTI) a terminal device (RepUE; UE1, UE2, ..., UEk) to fully or partially re-transmit the original concatenation packet (1; 2; 3) as a re-transmit concatenation packet (5, 6, 7, 8) to one or more terminal devices (UE1, UE2, ..., UEk),
depending on conditions determines another terminal device (RepUE; UE1, UE2, ..., UEk) to in the future fully or partially re-transmit the original concatenation packet (1; 2; 3) as a re-transmit concatenation packet (5, 6, 7, 8) to one or more terminal devices (UE1, UE2, ..., UEk),
wherein preferably this condition comprises new measurement results receipt of transmissions reported from terminal devices (UE1, UE2, ..., UEk) to the a base station (gNB, BS) device.

13. Method according to any of the preceding claims,
wherein after the original concatenation packet (1; 2; 3) was sent to a group of terminal devices (UE1, UE2, ..., UEk) of a telecommunication network (100), especially a cellular telecommunication network,
and after the re-transmitted concatenation packet (5; 6; 7; 8) was sent by the base station (gNB, BS) device or by a terminal device (RepUE; UE1, UE2, ..., UEk) to terminal devices (UE1, UE2, ..., UEk),
a re-re-transmitted concatenation packet (5; 6; 7; 8) is sent by the base station (gNB, BS) device or by a terminal device (RepUE; UE1, UE2, ..., UEk) to terminal devices (UE1, UE2, ..., UEk).

14. Method according to any of the preceding claims,
wherein a base station (gNB, BS) device informs sidelink groupcast terminal devices (RepUE; UE1, UE2, UEk) to be served with a re-transmitted concatenation packet (5; 6; 7; 8) transmission,
which terminal device (RepUE; UE1, UE2, UEk) was determined to fully or partially re-transmit the original concatenation packet (1; 2; 3) as a re-transmit concatenation packet (5, 6, 7, 8) to one or more of the named group's terminal devices (UE1, UE2, ..., UEk).

15. Method according to any of the preceding claims,
wherein a terminal device (RepUE; UE1, UE2, ..., UEk) that was in the past determined to fully or partially re-transmit the original concatenation packet (1; 2; 3) as a re-transmit concatenation packet (5, 6, 7, 8) to one or more of the named group's terminal devices (UE1, UE2, ..., UEk),
informs further terminal devices (RepUE; UE1, UE2, ..., UEk) by which other terminal device (RepUE; UE1, UE2, ..., UEk) the further terminal devices (RepUE; UE1, UE2, ..., UEk) will be served with a future re-transmitted concatenation packet (5; 6; 7; 8) transmission.

16. Device (, BS, UEk; UE1, UE2, ..., UEk, 300),
**characterized by** being
configured to decide, based on re-transmission criteria (201, 202),
on a re-transmission mode (1-1; 1-2; 1-3; 2-1; 2-2; 3-1; 3-2) representing how to transmit in a downlink from a base station to a terminal device (UE) at least one re-transmission concatenation (5; 6; 7;8) packet
after (, BS; UE1, UE2, ..., UEk) a transmission failure indication (NACK; no ACK) representing at least one failed transmission of an original concatenation packet (1; 2; 3) and/or of a sub-packet (11 -13, 21-23, 31-33) to at least one terminal device (UE1, UE2, ..., UEk).

17. Device (, BS, UEk; UE1, UE2, ..., UEk), especially according to the preceding device claim,
configured to do and/or trigger a transmission of at least one re-transmission concatenation packet (5; 6; 7; 8) to at least one terminal device (UE1, UE2, ..., UEk) after (, BS; UE1, UE2, ..., UEk) a transmission failure (NACK; no ACK) representing at least one failed transmission of an original concatenation packet (1; 2; 3) and/or of a sub-packet (11-13, 21-23, 31-33) to at least one terminal device (UE1, UE2, ..., UEk),
wherein a decided re-transmission mode (1-1; 1-2; 1-3; 2-1; 2-2; 3-1; 3-2) defines how to transmit the at least one re-transmission concatenation (5; 6; 7;8) packet.

18. Device (, BS, UE; UE1, UE2, ..., UEk, 300) according to any of the preceding device claims,
wherein the re-transmission criteria comprise one or two or three or four of:
- a terminal device (UE1, UE2, UEk) priority (201),
- a terminal device (UE1, UE2, UEk) latency budget (201),
- a base station (, BS) overload status (202),
- other criteria according to target concatenation packet QoS profile category of transmission of concatenation packets (1; 2; 3).

19. Device (, BS, UE; UE1, UE2, ..., UEk, 300) according to any of the preceding device claims, wherein
the re-transmission mode of the base station device (, BS) and/or terminal device (UE) comprises one or two or three or more of:
- a first mode (Mode 1) representing re-transmission concatenation packet types (6; 5,7), especially either
--re-transmission of at least one full concatenation packet (6) with original (11, 12, 13) and/or whole sub-packets (61, 62, 63) or
--re-transmission of at least one partial concatenation packet (5, 7) with preferably at the original transmission not received or undecoded (NACK) sub-packets (52; 53; 71, 72) or
--re-transmission of at least one hybrid concatenation packet (5) with preferably at the original transmission not received or undecoded (NACK; no ACK) sub-packets (52, 53) and with newly added sub-packet(s) (54, 55),
- a second mode (Mode 2) : representing radio access re-transmission schemes, especially either
--re-transmission of at least one concatenation packet (6, 8) using packet duplication (6, 8) or
--re-transmission of at least one concatenation packet using mTRP or multiple Transmission and Reception Point,
- a third mode (Mode 3) representing a re-transmission concatenation packet source, especially
--re-transmission of at least one concatenation packet from a base station (, BS) device or
--re-transmission of at least one concatenation packet from a terminal device (UE1, UE2, ..., UEk).

20. Device (, BS, UE; UE1, UE2, ..., UEk, 300) according to any of the preceding device claims, wherein
a re-transmitted concatenation packet (5; 6; 7; 8) comprises either all or less than all of the sub-packets (11, 12, 13; 21, 22, 23; 31, 32, 33) transmitted in the original transmitted concatenation packet (1; 2; 3).

21. Device (, BS, UE; UE1, UE2, ..., UEk, 300) according to any of the preceding device claims, wherein
a re-transmitted concatenation packet (6; 7) comprises either only sub-packets (61, 62, 63; 72, 73) transmitted in the original transmitted concatenation packet (1; 2; 3), or sub-packets (52, 53) transmitted in the original transmitted concatenation packet (1) and newly added sub-packets (54, 55) that were comprised in the original transmitted concatenation packet (1).

22. Device (gNB, BS, UE; UE1, UE2, ..., UEk, 300) according to any of the preceding device claims,
wherein a base station (gNB, BS) device is configured to send an original concatenation packet (1; 2; 3)
and wherein a terminal device (RepUE; UE1, UE2, ..., UEk) of a telecommunication network (100) is configured to re-transmit a re-transmitted concatenation packet (5; 6; 7; 8) and wherein one or at least two terminal devices (UE1, UE2, ..., UEk) of the telecommunication network (100) are configured to receive the re-transmitted concatenation packet (5; 6; 7; 8).

23. Device (, BS, UE; UE1, UE2, ..., UEk, 300) according to any of the preceding device claims,
wherein it comprises or is a base station (, BS) device configured to send an original concatenation packet (1; 2; 3) to a group of terminal devices (UE1, UE2, ..., UEk), and the base station (, BS) device or at least one of the terminal devices (RepUE; UE1, UE2, ..., UEk) of the (9) terminal devices (UE1, UE2, ..., UEk) is configured to re-transmit a concatenation packet (5; 6; 7; 8) to a group of one or more of the terminal devices (UE1, UE2, ..., UEk).

24. Device (gNB, BS, UE; UE1, UE2, ..., UEk, 300) according to any of the preceding device claims,
wherein it comprises or is a base station (gNB, BS) device configured to determine a terminal device (RepUE; Uk) to re-transmit a concatenation packet (7) to one or more of the terminal devices (UEs), especially in a message (SCG-RNTI: Sidelink Concatenation Groupcast RNTI) from the base station (gNB, BS) device to at least this terminal device (RepUE, Uk).

25. Device (gNB, BS, UE; UE1, UE2, ..., UEk, 300) according to any of the preceding device claims,
wherein it comprises or is a base station (gNB, BS) device configured to send the original concatenation packet (1; 2; 3) to more than one group of terminal devices (UE1, UE2, ..., UEk) of a telecommunication network,
and wherein a base station (gNB, BS) device or a terminal device (RepUE; UE1, UE2, ..., UEk) is configured to send the re-transmitted concatenation packet (5; 6; 7; 8) to more than one group (9, 10, 11) of terminal devices (UE1, UE2, ..., UEk).

26. Device (gNB, BS, UE; UE1, UE2, ..., UEk, 300) according to any of the preceding device claims,
wherein it comprises or is a base station (gNB, BS) device configured to determine a terminal device (RepUE; UE1, UE2, ..., UEk) that is determined to send a re-transmission concatenation packet (5, 6, 7, 8) to one or more of especially a group's (9) terminal devices (UE1, UE2, ..., UEk), based on receipt measurement reports that the base station (gNB, BS) device gNB received from at least one terminal device (RepUE; UE1, UE2, ..., UEk), especially after transmitting of an original and/or a re-transmitted concatenation packet (5; 6; 7; 8).

27. Device (gNB, BS, UE; UE1, UE2, ..., UEk, 300) according to any of the preceding device claims,
wherein it comprises or is a base station (gNB, BS) device configured to determine a terminal device (RepUE; UE1, UE2, ..., UEk) to fully or partially re-transmit the original concatenation packet (1; 2; 3) as a re-transmit concatenation packet to one or more of especially a group's terminal devices (UE1, UE2, ..., UEk),
a base station (gNB, BS) device is configured to inform with a message (SCG-RNTI) at least one terminal device (RepUE; UE1, UE2, ..., UEk), to which it sent the original concatenation packet (1; 2; 3), which terminal device (RepUE) is determined to fully or partially re-transmit the original concatenation packet (1; 2; 3) as a re-transmit concatenation packet (5, 6, 7, 8) to one or more of especially the group's terminal devices (UE1, UE2, ..., UEk).

28. Device (gNB, BS, UE; UE1, UE2, ..., UEk, 300) according to any of the preceding device claims,
wherein it comprises or is a device (gNB, BS) configured to, after having determined (SCG-RNTI, RNTI) a terminal device (RepUE; UE1, UE2, ..., UEk) to fully or partially re-transmit an original concatenation packet (1; 2; 3) as a re-transmit concatenation packet (5, 6, 7, 8),
further determine depending on conditions another terminal device (RepUE; UE1, UE2, ..., UEk) to in the future fully or partially re-transmit an original concatenation packet (1; 2; 3) as a re-transmit concatenation packet (5, 6, 7, 8),
wherein preferably this condition comprises one or more new measurement results reported from one or more terminal devices (UE1, UE2, ..., UEk) to the device (gNB, BS).

29. Device (gNB, BS, UE; UE1, UE2, ..., UEk, 300) according to any of the preceding device claims, wherein
it is a base station (gNB, BS) device or a terminal device (RepUE; UE1, UE2, ..., UEk) and it is configured to send re-re-transmitted concatenation packet (5; 6; 7; 8) to terminal devices (UE1, UE2, ..., UEk)
after the original concatenation packet (1; 2; 3) was sent by a base station (gNB, BS) device to a group of terminal devices (UE1, UE2, ..., UEk) of a telecommunication network (100), especially a cellular telecommunication network,
and after the re-transmitted concatenation packet (5; 6; 7; 8) was sent by a base station (gNB, BS) device or by a terminal device (RepUE; UE1, UE2, ..., UEk) to terminal devices (UE1, UE2, ..., UEk).

30. Device (gNB, BS, UE; UE1, UE2, ..., UEk, 300) according to any of the preceding device claims, wherein
it (gNB, BS) is configured to inform sidelink groupcast terminal devices (RepUE; UE1, UE2, ..., UEk) to be served with a re-transmitted concatenation packet (5; 6; 7; 8) transmission,
which terminal device (RepUE; UE1, UE2, ..., UEk) was determined to fully or partially re-transmit the original concatenation packet (1; 2; 3) as a re-transmit concatenation packet (5, 6, 7, 8) to one or more of especially a group's terminal devices (UE1, UE2, ..., UEk).

31. Device (gNB, BS, UE; UE1, UE2, ..., UEk, 300) according to any of the preceding device claims,
wherein it is a terminal device (RepUE; UE1, UE2, ..., UEk) that was in the past determined to fully or partially re-transmit the original concatenation packet (1; 2; 3) as a re-transmit concatenation packet (5, 6, 7, 8) to one or more of the named group's terminal devices (UE1, UE2, ..., UEk),
and wherein it is configured to inform further terminal devices (RepUE; UE1, UE2, ..., UEk) by which other terminal device (RepUE; UE1, UE2, ..., UEk) the further terminal devices (RepUE; UE1, UE2, UEk) will be served with a re-transmitted concatenation packet (5; 6; 7; 8) transmission.

32. Device according to any of the preceding device claims,
wherein the device comprises or is telecommunication network (100) or a base station (, BS) or a terminal device (RepUE; UE1, UE2, ..., UEk), especially mobile phone, smartphone, metering device, car TCU, wearable, USB device or module.
